# EUROPEAN PATENT APPLICATION

(11) **EP 1 860 463 A1**
(43) Date of publication of application: **28.11.2007**
(21) Application number: 06114366.5
(22) Date of filing: 23.05.2006
(51) Int. Cl.: G01T 1/20, G21K 4/00

(54) **Radiation image phosphor or scintillator panel**

(71) Applicant: Agfa HealthCare NV, 2640 Mortsel (BE)
(72) Inventor: Tahon, Jean-Pierre c/o Agfa HealthCare NV, 2640 Mortsel (BE); Uyttendaele, Carlo c/o Agfa HealthCare NV, 2640 Mortsel (BE); Leblans, Paul c/o Agfa HealthCare NV, 2640 Mortsel (BE)
(74) Representative: Theunis, Patrick

(57) **Abstract**

In a radiation image phosphor or scintillator panel having as a layer arrangement of consecutive layers upon a support layer or a support, a phosphor or scintillator layer comprising needle-shaped phosphor or scintillator crystals, and a protective layer, the said support layer is a titanium sheet or an alloy thereof, or the said support comprises a titanium layer or a titanium alloy layer.

## Description

### FIELD OF THE INVENTION

The present invention is related with a binderless radiation image screen or panel provided with a vapour deposited phosphor or scintillator layer upon a selected support, wherein said panel shows less "pittings" or a "lower pitting degree", due to corrosion, with an acceptable adhesiveness of the phosphor or scintillator layer onto said selected support.

### BACKGROUND OF THE INVENTION

Radiation image recording systems wherein a radiation image is recorded on a phosphor or scintillator screen by exposing the screen to image-wise modulated penetrating radiation are widely used nowadays.

In the case of storage phosphor screens a recorded image is reproduced by stimulating an exposed photostimulable phosphor screen by means of stimulating radiation and by detecting the light that is emitted by the phosphor screen upon stimulation, followed by converting the detected light into an electrical signal representation of the radiation image.

In several applications as e.g. in mammography, sharpness of the image is a very critical parameter. Sharpness of an image that has been read out of a photostimulable phosphor screen not only depends on the sharpness and resolution of the screen itself but also on the resolution obtained by the read-out system which is used.

In conventional read out systems used nowadays a scanning unit of the flying spot type is commonly used. Such a scanning unit comprises a source of stimulating radiation, e.g. a laser light source, means for deflecting light emitted by the laser so as to form a scanning line on the photostimulable phosphor screen and optical means for focusing the laser beam onto the screen.

Examples of such systems are the Agfa Diagnostic Systems, denominated by the trade name ADC 70 and Agfa Compact. In these systems photostimulable phosphor screens which comprise a BaFBr:Eu phosphor are commonly used.

The resolution of the read-out apparatus is mainly determined by the spot size of the laser beam. This spot size in its turn depends on the characteristics of the optical light focusing arrangement. It has been recognised that optimizing the resolution of a scanning system may result in loss of optical collection efficiency of the focussing optics. As a consequence an important fraction of the laser light is not focused onto the image screen. A severe prejudice exists against the use of systems having an optical collection efficiency of the focusing optics which is less than 50% because these systems were expected not to deliver an adequate amount of power to the screen in order to read out this screen to a sufficient extent within an acceptable scanning time. A solution has therefor been sought and found as disclosed in EP-A 1 065 523 and its corresponding US-A 6,501,088. Therein use has been made of a method for reading a radiation image that has been stored in a photostimulable phosphor screen comprising the steps of scanning said screen by means of stimulating radiation emitted by a laser source, detecting light emitted by said screen upon stimulation, converting detected light into an electrical signal representation of said radiation image, wherein said photostimulable phosphor screen comprises a divalent europium activated cesium halide phosphor wherein said halide is at least one of chloride and bromide and said laser beam is focused so that the spot diameter of the laser spot emitted by said laser, measured between 1/e² points of the gaussian profile of said laser beam is smaller than 100 µm. Object of that invention to provide a method and a system for reading a radiation image that has been stored in a photostimulable phosphor screen was resulting, besides in a method and a system for reading a radiation image stored in a photostimulable phosphor screen having a needle-shaped storage phosphor layer, in a method and system yielding a high sharpness.

In US-A 2004/0149929 a radiation image storage panel has been disclosed, composed of a support, a phosphor matrix compound layer covering a surface of the support at a coverage percentage of 95% or more, and a stimulable phosphor layer (which is composed of multiple prismatic stimulable phosphor crystals standing on the phosphor matrix compound layer) formed on the phosphor matrix compound layer, thereby providing a high peel resistance between the support and the stimulable phosphor layer, a high sensitivity, and a reproduced radiation image of high quality.

However, in a radiation image transformation panel, in order to attain the desired radiation absorbing power the needle shaped europium doped cesium halide storage phosphor must be formed in a layer having a thickness of about 200 µm to 800 µm. Since the parent compound of the photostimulable phosphor consisting of alkali halide compound, such as CsBr, has a large thermal expansion coefficient of about 50x10⁻⁶/°K, cracks may appear in such a relatively thick layer so that adhesion of the storage phosphor layer onto the support substrate may become a problem, leading to delamination. Factors having a negative influence onto cracking and delamination are related, besides with substrate temperature and changes thereof during the vapour deposition process, with the pressure of inert gas in the vacuum chamber and with presence of impurities, which have a significant influence upon crystallinity of the deposited phosphor layer during said vapour deposition process. In order to solve that problem, a solution has been proposed in JP-A 2005-156411. In that application a first vapour deposited layer was formed onto the substrate, wherein said layer was containing an alkali halide compound with a molecular weight smaller than the parent compound of the photostimulable phosphor. The layer with the vapour deposited stimulable europium doped cesium halide phosphor was further deposited thereupon. Nevertheless as a first layer between substrate and storage phosphor layer is a vapour deposited layer again, same problems were met with respect to cracks and delamina-tion and the expected improvement with respect thereto was not yet fully obtained.

In US-A 6,870,167 a process for the preparation of a radiation image storage panel having a phosphor layer which comprises a phosphor comprising a matrix component and an activator component, which comprises the steps of: forming on a substrate a lower prismatic crystalline layer comprising the matrix component by vapour deposition, and forming on the lower prismatic crystalline layer an upper prismatic crystalline layer comprising the matrix component and the activator component by vapour deposition as an arrangement favorable for crystallinity of said upper layer. In favour of adhesion however it has been proposed in US-Application 2005/51736 to make use of spherical shaped phosphors in the lower layer.

When performing vapour deposition techniques in order to prepare phosphor layers onto dedicate substrates, a highly desired substrate material whereupon the scintillator or phosphor material should be deposited is made of glass, a ceramic material, a polymeric material or a metal. As a metal base material use is generally made of metal sheets of aluminum as aluminum as a very good heat-conducting material allowing a perfect homogeneous temperature, not only over the whole substrate surface but also in the thickness direction. Such heat conductivities are in the range from 0.05-0.5 W/(m·K).

Since completely pure aluminum is not easily produced from a point of view of a refining technology, aluminum supports containing other elements in the aluminum alloy like silicon, iron, manganese, copper, magnesium, chromium, zinc, bismuth, nickel and titanium have been used as described in US-A's 3,787,249 and 3,720,508, wherein, as in automotive applications, bright anodised aluminum alloys having appearance somewhat similar to buffed stainless steels or to chrome-plated brass are much more economical to the user. Said alloys have markedly improved resistance to oxidation in the temperature range of 440° to 500°C which results in improved surface appearance after hot rolling and are tolerant to a broader range of solution composition in which they can be bright dipped. Alloys described in US-A 4,235,682 further exhibit substantially improved brightness after anodizing in sulphuric acid and sealing.

It should be noted however that in order to perform vapour deposition of two vapour deposited layers as has e.g. been described in US-A's 6,870,167 and 6,967,339, or in US-Application 2005/0077479 two different processes in a vapour depositing apparatus are required in order to deposit different raw starting materials in each layer: as it is known that increased dopant amounts in the upper layer lead to a desired higher sensitivity of the storage phosphor screen thus formed, it can be expected that higher dopant amounts lead to enhanced cracking and decreased adhesion of the coated layers. Otherwise in order to have better reflection properties in favour of reflection of light emitted upon stimulation of the storage phosphors and, as a consequence thereof, an enhanced sensitivity, it can be expected that a more mirror-like smoother support surface is not in favour of a better adhesion of phosphor layers, deposited thereupon.

Besides a good compromise between roughness, speed, cracking and adhesion, it is clear that lowering of the number of corrosion pittings or the "pitting degree" in the support layer, which appears as a consequence of the hygroscopicity of the CsBr matrix, should be strived after. After some storage time an alkali halide in an atmosphere of high humidity provokes corrosion of the support in such conditions as a very agressive reagent, more particularly for metal supports.

### SUMMARY OF THE INVENTION

Although being hitherto favorable with respect to adhesion characteristics of vapour deposited phosphor or scintillator layers having a thickness of 100 µm up to 1000 µm thereupon, as causing no undesired "cracks" or delamination of scintillator or phosphor "flakes" when prepared in a vapour deposition apparatus in optimised conditions, it is a main object of the present invention to avoid corrosion of the supporting layer, which occurs as a consequence of vapour deposition of phosphor layers in agressive conditions of high temperature and low pressure, wherein such corrosion becomes visible in form of "pittings" in flat field phosphor panels after a thermal treatment for 1 week at a temperature of 30°C and a relative humidity RH of 80%.

Moreover it is an object of the present invention to maintain an acceptable adhesion between support and phosphor layer, even when making use of smoother supports, providing sensitivity enhancing reflection properties.

The above-mentioned advantageous effects have been realised by providing a storage phosphor panel having the specific features set out in claim 1. Specific features for preferred embodiments of the invention are set out in the dependent claims.

It has been found now that in favour of less corrosion and acceptable adhesion between support layer and vapour deposited phosphor or scintillator layers, a radiation image phosphor or scintillator panel is advantageously provided, when having as a layer arrangement of consecutive layers upon a support layer or support, a phosphor or scintillator layer comprising needle-shaped phosphor or scintillator crystals, and a protective layer, wherein the said support layer is a titanium sheet or an alloy thereof, or wherein the said support comprises a titanium layer or a titanium alloy layer.

While establishing an advantageous property as "good adhesion" is self-evident, an advantageously "lowered corrosion level" becomes expressed as "absence of undesired corrosion pittings".

Further advantages and particular embodiments of the present invention will become apparent from the following description, without however limiting the invention thereto.

### DETAILED DESCRIPTION OF THE INVENTION

As stated above, according to the present invention a radiation image phosphor or scintillator panel having as a layer arrangement of consecutive layers upon a support layer or support, a phosphor or scintillator layer comprising needle-shaped phosphor or scintillator crystals, and a protective layer, the said support layer is a titanium sheet or an alloy thereof, or the said support comprises a titanium layer or a titanium alloy layer.

Titanium is known as a strong metal. It is as solid as steel and twice as solid as aluminum. Although its weight is 45% less than steel, it is 60% more heavy than aluminum. Cost price is higher than aluminum, but within the whole arrangement of layers in a storage phosphor plate as envisaged in the present invention, this does not form an insurmountable problem. Apart from elemental titanium metal plates, titanium alloys may be applied as those, which are known from the disclosures in US-A 6,979,375 and in US-Applications 2006/062685, 2006/037867, 2006/021680, without however being limited thereto.

More particular embodiments of the phosphor or scintillator panels according to the present invention are as follows.

In a radiation image phosphor or scintillator panel according to the present invention said support layer has an average surface roughness Rₐ of more than 0.05 µm, at least at the side of said vapour deposited phosphor or scintillator layer.

Furtheron in a radiation image phosphor or scintillator panel according to the present invention said support layer has an average surface roughness Rₐ of not more than 1.00 µm.

In a particular embodiment a radiation image phosphor or scintillator panel according to the present invention has an average surface roughness Rₐ in the range from 0.10 µm to 0.60 µm.

With respect to the meaning of roughness Rₐ it should be taken in mind that Rₐ should be measured according to DIN 4768 as an arithmetic average value of the departures of the roughness profile from the mean level line within an assessment length L, wherein the surface of the planes above and under the line are integrated in order to calculate said roughness Rₐ value. In practice roughness 'Rₐ' is calculated from a roughness profile of the titanium or titanium alloy support layer as registered by means of a perthometer, known as most commonly used technique, and is calculated according to DIN 4768 as already mentioned hereinbefore.

Physical and/or chemical graining may be applied, depending on the desired specifications. Roughnesses in the mentioned ranges may e.g. be attained by polishing as a physical procedure, if required. Roughening of a titanium (alloy) sheet or foil can be performed according to the well-kow methods as mechanical, chemical, optical or electrochemical graining or roughening or by a combination thereof. Mechanical graining can be performed by e.g. sand blasting, ball graining, wire graining, brush graining, slurry graining or a combination of these. Mechanical etching procedures thus refer to indentation procedures, wherein grooves are cut into the metal web, sheet, or foil. An etching resolution for relief patterns between grooves or pits is normally in the range of some micrometers. In another embodiment mechanical etching of the titanium (alloy) surface may be carried out by wet brushing as has been performed in case of aluminum as described in US-A's 5,775,977 and 5,860,184, wherein use is made of a cylinder brush in which brush rows having bundles of organic fibers and metal wires are arranged side by side on the surface and wherein the suspension used for the wet brushing contains abrasive particles in water. Alternatively, as disclosed in US-A 6,273,784 for aluminum, there may be provided at least one of a moving device for moving a graining brush in the width direction of the titanium (alloy) foil and a turning device for turning the graining brush so that the graining brush can be placed obliquely against a transporting direction of the web. By moving the graining brush periodically in the width direction of the web, the entire graining brush uniformly comes into contact with the titanium (alloy) sheet or foil. By turning the graining brush to place it obliquely against the transporting direction of the web, the entire graining brush can always come into contact with the titanium (alloy) sheet or foil. Accordingly, the abrasion in the bristles of the graining brush is maintained uniform. Combination with further polishing steps is not excluded in the preparation method of electrochemically and/or mechanically treated surface layers.

As applied by AHC Oberflächentechnik, Kerpen, Germany, titanium (alloy) sheets may be treated by a plasma chemical process in order to create a "Kepla-Coat^{®} " for the titanium (alloy) foil. The said plasma chemical process allows formation of grayish-white or deep black oxide ceramic conversion layers up to a thickness of even 50 µm onto said titanium (alloy) substrate, i.e; remarkably higher than conventional anodizing techniques as for aluminum. Titanium (alloy) substrates are partially melted by bursts of oxygen plasma produced in the electrolyte and an adhesive oxide ceramic compound is thereby formed. During the process 50% of the oxide layer grows into the material and 50 % to the outside. Sharp edges and cavities are evenly coated thereby maintaining the existing contours. Sliding friction of the "Kepla-Coat ^{®}" layers may further be lowered by integrated lubricants. The oxide ceramic layers thus formed moreover fulfil requirements regarding hardness, uniform layer formation, fatigue strength, dimensional accuracy or temperature load capacity. Details thereof can be found in "MAGOXID-COAT^{®} KEPLA-COAT^{®} ", "Coating-Service", Plasma-chemical Coatings AHC/09.00/1.000 from AHC Oberflächentechnik GmbH & Co. OHG, Kerpen, Germany.

As one of the properties of the titanium (alloy) foil or sheet, if compared with an aluminum support is, besides its higher density, its rigidity, i.e., its enhanced stiffness, an opportunity is offered to make use of a titanium (alloy) foil or sheet with a thickness of at most about 800 µm as in the case of an aluminum support, and more preferably less than 800 µm.

A radiation image phosphor or scintillator panel according to the present invention thus has a titanium sheet or an alloy thereof which has a thickness in the range of 400 µm to 800 µm.

In the case wherein the radiation image phosphor or scintillator panel according to the present invention comprises a titanium layer or a titanium alloy layer (as part of the support), said titanium sheet or an alloy thereof has a thickness in the range of 200 µm to 600 µm.

In the particular case according to the present invention, wherein said panel comprises a titanium layer or a titanium alloy layer, any other support layer not contacting said phosphor or scintillator layer, is a laminate layer, having a density which is lower than the density of titanium metal, i.e. a density of less than 4.54 g/cm³. This is clearly in favour of weight and cost price.

In that case a radiation image phosphor or scintillator panel according to the present invention is provided with a laminate layer, wherein said laminate layer is a metal layer or a polymeric layer.

When said laminate layer is a metal layer, more in particular an aluminum layer is preferred. When said laminate layer is a polymeric layer, the said polymeric layer is selected from the group consisting of a cellulose acetate, polyester, polyethylene terephthalate, polyethylene naphthalate, polyamide, polyimide, polyureum, epoxy, triacetate, polycarbonate, syndiotactic polystyrene, a carbon reinforced layer and an epoxy laminated glass layer or combinations thereof. Carbon reinforced layers (known as CFK) or carbon fibre reinforced layers and epoxy laminated glass layers (known as FR4) or glass fibre layers are available from GATEX, Wackersdorf, Germany.

In a particular embodiment of the radiation image phosphor or scintillator panel according to the present invention, said polymeric layer is a carbon reinforced resin layer. In a particular embodiment a multilayer arrangement of e.g. a carbon fiber reinforced plate or CFRP plate may be sandwiched between polyimide sheets and molded at a pressure in the range of 20 kg/cm² and a temperature of about 200°C for 15 min., so that after a gradually conducted cooling to about 100°C a three-layered support is obtained. A plurality of carbon fiber reinforced resin sheets may be used, wherein each of said sheets includes carbon fibers arranged in a direction and impregnated with a heat resistant resin such that directions of the carbon fibers in the carbon fiber reinforced resin sheets are different from each other, and wherein 60% or more carbon fibers in all of the carbon fiber reinforced resin sheets are arranged at approximately the same direction.

In another particular embodiment of the radiation image phosphor or scintillator panel according to the present invention, said polymeric layer is polyimide resin.

In a further particular embodiment a combination of a glass plate and an organic polymer layer may be applied, wherein such a combination may be formed by, e.g., a method in which a protective layer coating liquid is directly coated on the glass plate, or a method in which a previously prepared polymer protective layer is adhered onto the glass plate. In another particular embodiment a laminating structure with an arrangement of three layers may be laminated.

Making use of a laminate layer, commonly applied by means of an adhesive layer, is more particularly related with a choice of laminate layers which may be heated and pressed to be fixed onto the titanium or titanium alloy support. Examples of resins for the adhesive layer include e.g. polyester resin, polyacrylic resin and epoxy resin. If the laminate film becomes glued onto the support, the adhesive layer generally has a thickness in the range from 0.5 to 20 µm. As an adhesive agent layer to be laminated with a heat-sealable film, an acryl-based resin as an adhesive agent may be applied.

It is clear that, whatever a layer or layer arrangement is made as a laminate onto the base support, being a titanium or titanium alloy as in the present invention, the total thickness of all of those layers, inclusive for the binderless phosphor and protective layer(s) coated thereupon may not exceed a total thickness, in order to allow it to be inserted in a cassette before exposure and to be taken out of the cassette before scanning and read-out procedures.

A radiation image phosphor or scintillator panel according to the present invention advantageously has a phosphor layer which comprises needle-shaped phosphor crystals having an alkali metal halide as a matrix compound and a lanthanide as an activator compound.

In a more particular embodiment thereof said needle-shaped phosphor is a photostimulable CsBr:Eu phosphor.

Such a needle-shaped phosphor, arranged in a binderless layer, is manufactured by a vapour deposition method. As examples of vapour deposition methods, a physical vapour deposition method (PVD), a sputtering method, a chemical vapour deposition method (CVD), and vaporisation techniques like ion plating method and atomisation techniques like electron beam evaporation are well-known. In a method of preparing a radiation image storage panel according to the present invention, said phosphor layer is coated onto the titanium (alloy) support sheet or foil by a technique selected from the group consisting of physical vapour deposition, chemical vapour deposition and an atomisation technique. As an atomisation technique, electron beam vaporisation can be used, as has e.g. been described in US-A's 6,740,897 and 6,875,990 and in US-Applications 2002/050570, 2004/075062 and 2004/149931. In the electron beam evaporation technique, an electron beam generated by an electron gun is applied onto the evaporation source and an accelerating voltage of electron beam preferably is in the range of 1.5 kV to 5.0 kV. By applying the electron beam technique, the evaporation source of matrix component and activator element is heated, vaporised, and deposited on the substrate. Physical vapour deposition techniques are particularly suitable for use in the deposition of binderless needle-shaped crystals in the phosphor layer of the present invention, such as resistive heating, sputtering and RF induction techniques. Resistive heating vacuum deposition, may advantageously be applied as has been described e.g. in US-A's 6,720,026; 6,730,243 and 6,802,991 and in US-Application 2001/007352. This technique is recommended as a method in order to vapour deposit the needle-shaped binderless storage phosphors for a panel according to the present invention. In the resistance heating evaporation, the evaporation sources are heated by supplying electrical energy to the resistance heating means: crucible or boat configurations - preferably composed of refractory materials - in a vapour deposition apparatus, in order to practically realise a homogeneous deposit of vapour deposited phosphor material may be applied as has e.g. been disclosed in US-Applications 2005/000411, 2005/000447 and 2005/217567.

Vapour deposition of a phosphor layer at high temperatures is performed as a process providing high phosphor packing densities, preferably in the range from 60% to 90%. Said vapour deposition process is advantageously performed in a vapour deposition chamber under low pressure by heating selected raw materials. With respect to the present invention vapour deposition methods are advantageously applied for the particular phosphors described herein as has e.g. been described in US-A 6,802,991 wherein depositing of the europium doped cesium halide phosphor on a substrate has been performed by a method selected from the group consisting of physical vapour deposition, chemical vapour deposition or an atomisation technique, like e.g. electron-beam deposition or plasma chemical vapour deposition. Besides controlling vapour pressure (e.g. under medium vacuum in the range from 0.05 to 10 Pa as in US-A 2005/0077478 or at a pressure in the range of 0.3 to 3 Pa in the presence of an inert gas as e.g. argon or nitrogen as in US-A 2004/149929 or even to a pressure of less than 0.01 Pa as in US-A 6,802,991) and substrate temperature as in that US-A 6,802,991; and also as has been set forth in US-A 6,720,026 wherein the support has been cooled before the vapour stream causes deposition of vaporised phosphor onto the support, it is recommended that the evaporation source has a water content of not more than 0.5 wt%, as has been set forth in US-A 2003/113,580. Vapour deposition in a vacuum deposition apparatus as in the present invention thus requires adjustment of a predetermined degree of vacuum. For a binderless needle-shaped storage phosphor layer in a panel according to the present invention, formation of said phosphor under a high vacuum is desirable: the degree of vacuum of 1 x 10⁻⁵ to 5 Pa, and, more specifically, from 1 x 10⁻² to 2 Pa is desired, wherein an inert gas, such as an Ar or Ne noble gas, or alternatively, an inert gas as nitrogen gas, may be introduced into the vacuum deposition apparatus. Evacuation in order to give an even lower inner pressure of 1 x 10⁻⁵ to 1 x 10⁻² Pa is more preferred for electron beam evaporation. Introduction of oxygen or hydrogen gas may be advantageously performed, more particularly in order to enhance reactivity and/or e.g. in an annealing step. Introduction of an inert gas can moreover be performed in favour of cooling the vapour stream before deposition onto the titanium (alloy) substrate and/or the substrate, whereupon phosphor vapour raw materials should be deposited as disclosed in US-A 6,720,026. Alternatively one side of the support may be heated while the other side may be cooled while performing vapour deposition as disclosed in US-A 7,029,836.

The process of vacuum vapour deposition, may comprise the steps of heating to vaporise an evaporation source comprising a phosphor or its starting raw materials by means of a resistance heater or an electron beam, and depositing and accumulating the vapour on a substrate such as a metal sheet to form a layer of the phosphor in the form of columnar crystals in one binderless layer. As described in US-A 2004/0149929 or in US-A 2006/0054862 multiple prismatic stimulable phosphor crystal layers standing at the phosphor matrix compound layer or an amorphous crystal layer standing upon and having the same composition as the stimulable phosphor may be deposited. Multivapour deposition may be preferred because the vaporisation rate of each source can be independently controlled in that case, in order to incorporate the activator uniformly in the matrix, even if the compounds have very different melting points or vapour pressures. According to the composition of the desired phosphor, each evaporation source may contain the matrix compound or the activator compound only or a mixture thereof, optionally in the presence of additives if required. Three or more sources may even be used. For example, in addition to the above-mentioned sources, an evaporation source containing optional additives may be used. In the case wherein a phosphor layer is formed by multi-vapour deposition or co-deposition, at least two evaporation sources are used: one of the sources contains a matrix compound of the phosphor, while the other contains an activator compound. The multi-vapour deposition is preferred in cases wherein the vaporisation rate of each source should be independently controlled in order to incorporate the activator in a more uniform way in the matrix as is the case when said compounds have very different melting points or vapour pressures. According to the composition of the desired phosphor, each evaporation source may consist of the matrix compound or the activator compound only or otherwise may be a mixture thereof with additives. Three or even more sources may thus be used. The matrix compound of the phosphor may be either the matrix compound itself or a mixture of two or more substances that react with each other to produce the matrix compound. The activator compound generally is a compound containing an activating element, and hence is, for example, a halide or oxide of the activating element as e.g. described in US-A 2005/0133731. The temperature of the substrate generally is kept in the range of from 20°C to 350°C., preferably in the range of 100°C to 300°C and even more preferred between 150°C and 250°C. The deposition rate, which means how fast the formed phosphor is deposited and accumulated on the substrate, can be controlled by adjusting the electric currents supplied to the crucible heaters in the vapour depositing apparatus. The deposition rate generally is in the range of 0.1 to 1,000 µm/min, preferably in the range of 1 to 100 µm/min. It is not excluded to perform a pretreatment to the support, coated with the sublayer as in the present invention: in favour of an enforced drying step, the layer arrangement before phosphor deposition may be held at a high temperature during a defined time. It is even not excluded to increase the percentage of relative humidity until the surface of the sublayer starts hydrating, in order to get a smooth base for the phosphor layer. Efficient deposition of the storage phosphor layer onto the substrate however, requires temperatures for the substrate in the range from 50°C to 250°C as has been disclosed in US-Application 2004/081750. Heating or cooling the substrate during the deposition process may thus be steered and controlled as required.

After the deposition procedure is complete, the deposited layer is preferably subjected to heat treatment or annealing procedure, which is carried out generally at a temperature of 100 to 300°C for 0.5 to 3 hours, preferably at a temperature of 150 to 250°C for 0.5 to 2 hours, under inert gas atmosphere which may contain a small amount of oxygen gas or hydrogen gas. Annealing procedures may be applied as described in US-A 6,730,243; 6,815,692 and 6,852,357 or in US-Applications 2004/0131767, 2004/0188634, 2005/0040340 and 2005/0077477.

According to the present invention, said stimulable phosphor layer comprises needle-shaped phosphor crystals having an alkali metal halide as a matrix or base compound and a lanthanide as an activator or dopant compound.

In a particular embodiment according to the present invention, said needle-shaped stimulable phosphor is a CsBr:Eu phosphor.

A photostimulable CsBr:Eu phosphor in form of needles, selected from a viewpoint of high sensitivity and high sharpness, is advantageously provided with amounts of Eu as an activator or dopant, in the range from 0.0001 to 0.01 mole/mole of CsBr, and more preferably from 0.0003 to 0.005 mole/mole. In the case of a stimulable CsBr:Eu phosphor, the europium compound of the evaporation source preferably may start from a divalent europium Eu²⁺ compound and a trivalent Eu³⁺ compound: said europium compound may be EuBrₓ in which x satisfies the condition of 2.0 ≤ x ≤ 2.3, wherein a europium compound containing the divalent europium compound as much as possible, i.e. at least 70%, is desired. Eu-containing compounds of the activator compound, in one embodiment contain divalent Eu as much as possible because the desired stimulated emission is emitted from the phosphor activated by divalent Eu. Since commercially available Eu-containing compounds generally contain oxygen atoms, they necessarily contain both divalent Eu and trivalent Eu, the Eu-containing compounds, therefore, are preferably melted under Br gas-atmosphere so that oxygen-free EuBr₂ can be prepared. The evaporation source preferably has a water content of not more than 0.5 wt%. For preventing the source from bumping, it is particularly important to control the water content in the above low range if the compound of matrix or activator is a hygroscopic substance such as EuBr₂ or CsBr. The compounds are preferably dried by heating at 100°C to 300°C under reduced pressure. Otherwise, the compounds may be heated under dry atmosphere such as nitrogen gas atmosphere to melt at a temperature above the melting point for several minutes to several hours.

In the case wherein the phosphor layer is produced by mono-vapour deposition, only one evaporation source containing the phosphor itself or a mixture of constitutional materials thereof (which react with each other to produce the phosphor) is heated using a single resistance-heating unit. The evaporation source is beforehand prepared so that it may contain the activator in a desired amount. Otherwise, in consideration of vapour pressure difference between the matrix components and the activator, the deposition procedure can be carried out while the matrix components are being supplied to the evaporation source. A thus produced phosphor layer consists of phosphor in the form of columnar crystals grown almost in the thickness direction, and there is no anomalously grown phosphor column. In the phosphor layer, there are gaps among the phosphor columns. The thickness of the phosphor layer depends on, e.g., desired characteristics of the storage panel, conditions and processes of the deposition, but is normally in the range of 50 µm to 1 mm, and more preferably in the range of 200 µm to 700 µm.

Vapour deposition may be applied wherein plural evaporation source portions may be used, and wherein e.g. one crucible comprises the activator raw material component and the other crucible comprises a mother component source and wherein both of them are placed adjacently to each other in order to be used as one unit.

Although the thickness of the phosphor layer changes with the sensitivity class of the photostimulable phosphor, it is desirable to deposit a phosphor layer having a thickness from 100 µm to 1000 µm, more preferably from 200 µm to 800 µm, and still more preferably from 300 µm to 700 µm. Too thin a phosphor layer causes too little absorbed amounts of radiation, an increased transparency, and a deteriorated image quality of the obtained radiation image, whereas too thick a phosphor layer will cause image quality to decrease, due to a lowered sharpness.

Phosphor raw materials comprising matrix and activator compounds are advantageously present as precursors in form of powders or tablets. Examples of phosphor precursor materials useful in the context of the present invention have been described in US-Applications 2005/184250, 2005/184271 and 2005/186329. Evaporation may be performed from one or more crucibles. In the presence of more than one crucible, an independent vaporisation control may be performed in favour of uniformity, homogeneity and/or dedicated incorporation of activator or dopant. This is more particularly preferred when differences in vapour pressure between matrix and activator compound are significant, as is the case e.g. for CsBr and EuOBr or EuBrₓ in which x satisfies the condition of 2.0 ≤ x ≤ 2.3 as already set forth hereinbefore.

Average amounts of Europium dopant incorporated in the needle-shaped CsBr:Eu crystals are in the range from 150 to 750 µmol/mol, and more preferably in the range from 200 to 600 µmol/mol. If required said amounts may be increased, in favour of speed or sensitivity as the titanium (alloy) support does not show a tendency to increased corrosion by incorporation of more dopant amounts in the phosphor crystals as is the case with aluminum supports.

The formed phosphor layer thus comprises prismatic, needle-shaped stimulable phosphor crystals which are aligned almost perpendicularly to the substrate. Thus formed phosphor layers, only comprising the stimulable phosphor without presence of a binder, produce cracks extending the depth direction in the phosphor layer. In favour of image quality, especially sharpness, the needle-shaped phosphor layer may advantageously be colored with a colorant which does not absorb the stimulated emission but the stimulating rays as has e.g. been described in US-A 6,977,385.

After the deposition procedure is complete, the deposited layer is preferably subjected to heat treatment, also called "annealing", which is carried out generally at a temperature of 100°C to 300° C. for 0.5 to 3 hours, preferably at a temperature of 150°C to 250°C for 0.5 to 2 hours, under inert gas atmosphere which may contain a small amount of oxygen gas or hydrogen gas. Annealing procedures may be applied as described in US-A 6,730,243; 6,815,692 and 6,852,357 or in US-Applications 2004/0131767, 2004/0188634, 2005/0040340 and 2005/0077477.

"Good adhesion" as a result of measures taken in the present invention as described hereinbefore, should moreover be understood here as absence, or, at least, decreased tendency of cracking of the phosphor layer and, as a consequence thereof, less tendency to delamination and vice versa.

The layer arrangement of the screens or panels, consisting of the dedicated titanium support or titanium alloy support or comprising a titanium layer or titanium alloy layer as part of the support and whereupon a phosphor or scintillator layer is deposited as disclosed in the present invention, is further advantageously protected with a protective layer at the side of the phosphor or scintillator layer.

A transparent protective film on the surface of the stimulable phosphor layer is advantageously applied in order to ensure good handling of the radiation image storage panel in transportation steps and in order to avoid deterioration and damaging. Chemically stable, physically strong, and high moisture proof coatings are advantageously provided by e.g.overcoating the phosphor or scintillator layer with a solution in which an organic polymer (e.g., cellulose derivatives, polymethyl methacrylate, fluororesins soluble in organic solvents) is dissolved in a solvent, by placing a sheet prepared beforehand for the protective film (e.g., a film of organic polymer such as polyethylene terephthalate, a transparent glass plate) on the phosphor film with an adhesive, or by depositing vapour of inorganic compounds on the phosphor film. Protective layers may thus be composed of materials such as a cellulose acetate, nitrocellulose, polymethyl-methacrylate, polyvinyl-butyral, polyvinyl-formal, polycarbonate, polyester, polyethylene terephthalate, polyethylene, polyvinylidene chloride, nylon, polytetrafluoroethylene and tetrafluoroethylene-6 fluoride propylene copolymer, a vinylidene-chloride-vinyl chloride copolymer, and a vinylidene-chloride-acrylonitrile copolymer. A transparent glass support may also be used as a protective layer. Moreover, by vacuum deposition, making use e.g. of the sputtering technique, a protective layer of SiC, SiO2, SiN, and Al₂O₃ grade may be formed. Various additives may be dispersed in the protective film. Examples of the additives include light-scattering fine particles (e.g., particles of magnesium oxide, zinc oxide, titanium dioxide and alumina), a slipping agent (e.g., powders of perfluoro-olefin resin and silicone resin) and a cross-linking agent (e.g. polyisocyanate). Preferred thicknesses of protective layers are in the range from 1 µm up to 20 µm for polymer coatings and even up to 2000 µm in case of inorganic materials as e.g. silicate glass. For enhancing the resistance to stain, a fluororesin layer is preferably provided on the protective film. Fluororesin layers may be formed by coating the surface of the protective film with a solution in which a fluororesin is dissolved or dispersed in an organic solvent, and drying the coated solution. The fluororesin may be used singly, but a mixture of the fluororesin and a film-forming resin may be employed. In the mixture, an oligomer having polysiloxane structure or perfluoroalkyl group may be added furtheron. In the fluororesin layer, a fine particle filler may be incorporated to reduce blotches caused by interference and to improve the quality of the resultant image. The thickness of the fluororesin layer is generally in the range of 0.5 to 20 µm. For forming such a fluororesin layer, additives such as a cross-linking agent, a film-hardening agent and an anti-yellowing agent may be used. In particular, the cross-linking agent is advantageously employed to improve durability of the fluororesin layer. In order to further improve the sharpness of the resultant image in a storage phosphor panel with a photostimulable phosphor, at least one layer may be colored with a colorant which does not absorb the stimulated emission, normally emitted in the wavelength range from 300 to 500 nm, but effectively absorbs the stimulating radiation in the wavelength range from 400 to 900 nm.

In another embodiment heating the phosphor plate in an organic solvent gas and sealing the phosphor plate with a moisture-proof protective film in order to prepare the radiation image storage panel as in published US-Application 2006/0049370, may be applied.

Further embodiments of protective layers suitable to be applied can be found in US-A's 6,710,356; 6,800,362; 6,822,243; 6,844,056; 6,864,491 and 6,984,829 and in US-Applications 2004/0164251, 2005/0067584, 2004/0183029, 2004/0228963,2005/0104009, 2005/0121621, 2005/0139783, 2005/0211917, 2005/0218340, 2006/0027752 and 2006/0060792, without however being limitative.

As an advantageous effect of the present invention an excellent resistance against corrosion and wear is offered by the titanium (alloy) support layer or titanium (alloy) comprising support, whether, more in particular, its surface has been covered with a "Kepla-Coat^{®} " layer as described hereinbefore, or even for a polished pure metallic titanium foil, sheet or plate.

### Examples

While the present invention will hereinafter in the examples be described in connection with preferred embodiments thereof, it will be understood that it is not intended to limit the invention to those embodiments.

Comparative tests with respect to corrosion and occurrence of pittings were performed for comparative aluminum supports ("Al P51" - anodised aluminum - and "AlMg3" - anodised aluminum having 3wt% of magnesium, black sealed)and for inventive titanium supports ("Ti AHC blue", "Ti AHC + 10µm Kepla-coat Black") and a pure, polished titanium metal plate.

More in particular as an inventive support, a sheet or foil of titanium was used, wherein said sheet having a thickness of about 600 µm was treated by a plasma chemical process by AHC Oberflachentechnik in order to create a "Kepla-Coat^{®} " for the titanium foil. By the said plasma chemical process a grayish-white or deep black oxide ceramic conversion layer was formed onto said titanium substrate. 50% of the oxide layer was grown into the material and 50 % to the outside, wherein the said anodisation treatment was thus providing an anodised layer having a thickness 't' of about 10 µm.

Roughness 'Rₐ'-values of the titanium support plate, expressed in µm, were calculated as mentioned above after having registered the surface roughness profile with a perthometer. Samples were scanned therefor with a Dektak-8 Stylus Profiler and the values were calculated as described in DIN-4768: a roughness value Rₐ of 0.598 µm was calculated.

CsBr:Eu photostimulable phosphor screens were prepared on comparative and inventive supports, i.e., anodised aluminum plates as comparative supports as well as on inventive titanium supports. In a vacuum chamber CsBr:Eu was deposited by means of a thermal vapour deposition process, starting from a mixture of CsBr and EuOBr as raw materials. Said deposition process onto said supports was performed in such a way that said supports were rotating over the vapour stream. So in an electrically heated oven a refractory tray or boat was used, in which 180 g of a mixture of CsBr and EuOBr as raw materials in a 99.5%/0.5% CsBr/EuOBr percentage ratio by weight were present as raw materials in order to become vaporised. An elongated boat having a length of 100 mm was used as a crucible, having a width of 35 mm and a side wall height of 45 mm, wherein said boat was composed of "tantalum" having a thickness of 0.5 mm, composed of 3 integrated parts: a crucible container, a "second" plate with slits and small openings and a cover with slit outlet. The longitudinal parts were fold from one continuous tantalum base plate in order to overcome leakage and the head parts were welded. Said second plate was mounted internally in the crucible at a distance from the outermost cover plate which was less than 2/3 of said side wall height of 45 mm. Under a vacuum pressure of 2 x 10 ⁻¹Pa, equivalent with 2 x 10⁻³ mbar, maintained by a continuous inlet of argon gas into the vacuum chamber, and at a sufficiently high temperature of the vapour source (760°C) the obtained vapour was directed towards the moving sheet support and was successively deposited thereupon while said support was rotating over the vapour stream. Said temperature of the vapour source was measured by means of thermocouples present outside and pressed under the bottom of said crucible and by tantalum protected thermocouples, present in the crucible.

The titanium supports having a thickness of 600 µm, a width of 10 cm and a length of 10 cm, as well as the comparative aluminum supports, were positioned at the side whereupon the phosphor should be deposited at a distance of 22 cm between substrate and crucible vapour outlet slit.

No further intermediate layer was thus previously coated or deposited between the comparative aluminum support layers or inventive titanium support layers and the binderless CsBr:Eu needle-shaped phosphor layer, vapour deposited upon said support layers.

Plates were taken out of the vapour deposition apparatus after having run same vapour deposition times, leading to phosphor plates having phosphor layers of about equal thicknesses.

Adhesion of the layers was evaluated during handling of the plates, i.e. during at least one of following steps:
(1) removing the vapour deposited phosphor plate from vacuum chamber in the vapour depositing apparatus;
(2) application of identification means to the plate by inscription;
(3) testing of the behaviour of the plate in a conditioning room at well-defined temperature and humidity conditions: in both cases, i.e., with an anodised aluminum "P51" plate as a comparative support layer and with a titanium "Ti AHC blue" as an inventive plate, an acceptable to good adhesion was found.

Data about coating weight of the phosphor and relative speed (fresh, i.e. without conditioning) have been set out in the Table 1, wherein relative speed (SAL%) is defined as the speed of each of the screens compared with the reference speed of an MD10^{®} reference photostimulable phosphor screen manufactured by Agfa-Gevaert, Mortsel, Belgium.

Corrosion and "pittings" were evaluated after washing off the phosphor layer from the substrate with demineralised water. Corrosion figures from 1 to 5 were given: "1" - excellent, no corrosion - "2": slightly; "3": corroded; "4": heavy corrosion; "5" -completely corroded, whereas an evaluation of "pittings" was qualitatively expressed as becomes clear from the remarks, added in the Table 1.

**Table 1**

| Plate No. | Phosphor coating wt. (mg/cm²) | Speed SAL % | Corrosion | Pitting |
|---|---|---|---|---|
| Al P51 (comp.) | 43.6 | 109 | 5 | strong |
| Ti AHC blue | 43.5 | 77 | 1 | absent |
| Ti AHC + 10 µm Kepla-coat Black | 43.0 | 68 | 1 | absent |
| AlMg3 0.8 mm STB anodisation 20µm black sealed | 44.7 | 52 | 3-4 | Fine white pittings |
| Ti pure polished metal plate | 49.4 | 107 | 1 | absent |

Table 1 illustrates absence of corrosion and "pittings" for the inventive titanium plates. Same speed as for the comparative A1 P51 plate is attainable as has been illustrated for the inventive polished pure titanium metal plate.

An additional corrosion test of the supports as such was moreover performed by inserting the support in a solution of europium bromide salt with trivalent and divalent europium respectively.

Visual inspections after 1, 4 and 27 days were clearly illustrative for the remarkable differences between both types of supports: whereas the pure metal titanium plates remained free from corrosion, aluminum supports were dissolved or were at least heavily corroded (see Table 2: figures from "1" - excellent, no corrosion - to "5" - completely corroded - "2" as showing slight corrosion; "3": showing clear corrosion; and "4" showing heavy corrosion).

**Table 2**

| | | | |
|---|---|---|---|
| Plate in 1 M EuBr₃.6H₂O | 1 day | 4 days | 27 days |
| Al P51 | 4-5 | 5 (at least) | no more relevant |
| Ti | 1 | 1 | 1 |
| Plate in 1 M EuBr₂.6H₂O | 1 day | 4 days | 27 days |
| Al P51 | 3-4 | 5 | no more relevant |
| Ti | 1 | 1 | 1 |

Whereas the inventive titanium support was not corroded by the europium salt solutions, the comparative aluminum support was heavily corroded by the same aqueous europium salt solutions.

Having described in detail preferred embodiments of the current invention, it will now be apparent to those skilled in the art that numerous modifications can be made therein without departing from the scope of the invention as defined in the appending claims.

## Claims

1. A radiation image phosphor or scintillator panel comprising as a layer arrangement of consecutive layers upon a support layer or support, a phosphor or scintillator layer comprising needle-shaped phosphor or scintillator crystals, and a protective layer, wherein the said support layer is a titanium sheet or an alloy thereof, or wherein the said support comprises a titanium layer or a titanium alloy layer.

2. A radiation image phosphor or scintillator panel according to claim 1, wherein said support layer or support has an average surface roughness Rₐ of more than 0.05 µm, at least at the side of said vapour deposited phosphor or scintillator layer.

3. A radiation image phosphor or scintillator panel according to claim 1 or 2, wherein said support layer or support has an average surface roughness Rₐ of not more than 1.00 µm, at least at the side of said vapour deposited phosphor or scintillator layer.

4. A radiation image phosphor or scintillator panel according to any one of the claims 1 to 3, wherein said support layer or support has an average surface roughness Rₐ in the range from 0.10 µm to 0.60 µm.

5. A radiation image phosphor or scintillator panel according to any one of the claims 1 to 4, wherein said titanium sheet or an alloy thereof has a thickness in the range of 400 µm to 800 µm.

6. A radiation image phosphor or scintillator panel according to any one of the claims 1 to 4, wherein said titanium sheet or an alloy thereof has a thickness in the range of 200 µm to 600 µm.

7. A radiation image phosphor or scintillator panel according to any one of the claims 1 to 6, wherein in the case that said panel comprises a titanium layer or a titanium alloy layer, any other support layer not contacting said phosphor or scintillator layer, is a laminate layer, having a density which is lower than the density of titanium metal.

8. A radiation image phosphor or scintillator panel according to any one of the claims 1 to 7, wherein said laminate layer is a metal layer or a polymeric layer.

9. A radiation image phosphor or scintillator panel according to claim 8, wherein said polymeric layer is selected from the group consisting of a cellulose acetate, polyester, polyethylene terephthalate, polyethylene naphthalate, polyamide, polyimide, polyureum, epoxy, triacetate, polycarbonate, syndiotactic polystyrene, a carbon reinforced layer and an epoxy laminated glass layer or combinations thereof.

10. A radiation image phosphor or scintillator panel according to claim 8, wherein said metal layer is an aluminum layer.

11. A radiation image phosphor or scintillator panel according to any one of the claims 1 to 10, wherein said phosphor layer comprises needle-shaped phosphor crystals having an alkali metal halide as a matrix compound and a lanthanide as an activator compound.

12. Panel according to claim 11, wherein said needle-shaped phosphor is a photostimulable CsBr:Eu phosphor.

## Amended claims

### Amended claims in accordance with Rule 86(2) EPC.

**1.** A radiation image phosphor or scintillator panel comprising as a layer arrangement of consecutive layers upon a support layer or support, a phosphor or scintillator layer comprising needle-shaped phosphor or scintillator crystals, and a protective layer, wherein the said support layer is a polished pure titanium sheet or an alloy thereof, or wherein the said support comprises a polished pure titanium layer or a titanium alloy layer.

**2.** A radiation image phosphor or scintillator panel according to claim 1, wherein said support layer or support has an average surface roughness Rₐ of more than 0.05 µm, at least at the side of said vapour deposited phosphor or scintillator layer.

**3.** A radiation image phosphor or scintillator panel according to claim 1 or 2, wherein said support layer or support has an average surface roughness Rₐ of not more than 1.00 µm, at least at the side of said vapour deposited phosphor or scintillator layer.

**4.** A radiation image phosphor or scintillator panel according to any one of the claims 1 to 3, wherein said support layer or support has an average surface roughness Rₐ in the range from 0.10 µm to 0.60 µm.

**5.** A radiation image phosphor or scintillator panel according to any one of the claims 1 to 4, wherein said polished pure titanium sheet or an alloy thereof has a thickness in the range of 400 µm to 800 µm.

**6.** A radiation image phosphor or scintillator panel according to any one of the claims 1 to 4, wherein said titanium sheet or an alloy thereof has a thickness in the range of 200 µm to 600 µm.

**7.** A radiation image phosphor or scintillator panel according to any one of the claims 1 to 6, wherein said panel has a phosphor layer comprising needle-shaped phosphor crystals having an alkali metal halide as a matrix compound and a lanthanide as an activator compound.

**8.** Panel according to claim 7, wherein said needle-shaped phosphor is a photostimulable CsBr:Eu phosphor.
